(19) Europäisches Patentamt
European Patent Office
Office européen des brevets

(11) **EP 3 878 564 B1**

(12) **EUROPEAN PATENT SPECIFICATION**

(45) Date of publication and mention of the grant of the patent:
**11.05.2022 Bulletin 2022/19**

(21) Application number: **21161939.0**

(22) Date of filing: **11.03.2021**

(51) International Patent Classification (IPC):
**B05B 16/00** (2018.01)      **C14C 15/00** (2006.01)
**B65G 15/50** (2006.01)      **B05B 13/04** (2006.01)
**B65G 15/10** (2006.01)

(52) Cooperative Patent Classification (CPC):
**B05B 16/95; C14C 15/00;** B05B 13/0484;
B65G 15/105

(54) **MACHINE TO SPRAY PRODUCTS ON FLEXIBLE LAMINAR ELEMENTS WITH AN EXTENDED SURFACE**

MASCHINE ZUM SPRÜHEN VON PRODUKTEN AUF FLEXIBLE LAMINARE ELEMENTE MIT ERWEITERTER OBERFLÄCHE

MACHINE POUR VAPORISER DES PRODUITS SUR ÉLÉMENTS LAMINAIRES FLEXIBLES À SURFACE ÉTENDUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2020 IT 202000005395**

(43) Date of publication of application:
**15.09.2021 Bulletin 2021/37**

(73) Proprietor: **GE.MA.TA. S.p.A.**
**36070 Trissino (VI) (IT)**

(72) Inventor: **MAITAN, Gianni**
**36070 TRISINO (VI) (IT)**

(74) Representative: **Bonini, Ercole**
**Studio Bonini Srl**
**Corso Fogazzaro, 8**
**36100 Vicenza (IT)**

(56) References cited:
**WO-A1-2014/122682      GB-A- 699 688**

• **DATABASE WPI Week 201765 Thomson Scientific, London, GB; AN 2017-56453S XP002800653, & CN 107 029 916 A (ZHEJIANG FUBANG GROUP CO LTD) 11 August 2017 (2017-08-11)**

**Description**

The invention relates to a machine to spray products on discontinuous flexible laminar elements with an extended surface, in particular for the painting of tannery hides P.

The machine of the invention is preferably used to conduct the spray application of dyes on tannery hides P.

With regard to other purposes, the machine of the invention can be used for the spray application on hides of products other than dyes suited to give them particular characteristics.

The prior art includes systems for the treatment of flexible laminar elements, for example, spray painting systems for hides spread on a cord belt which moves them in a continuous manner through the spray booth and subsequently through the drying oven until they reach the unloading station.

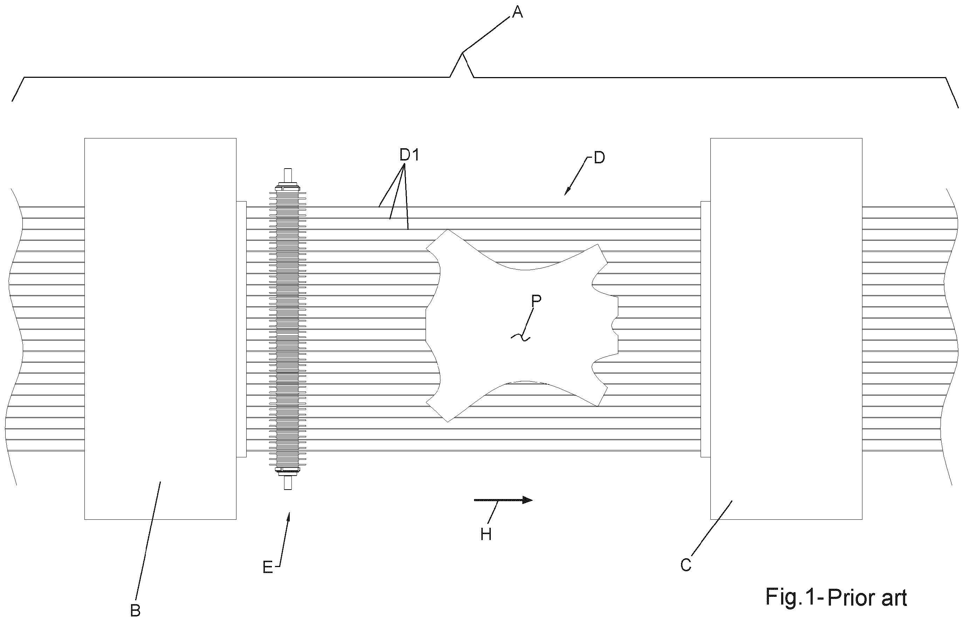

A spray painting machine of the prior art is schematically represented in plan view in Fig. 1 where it is indicated as a whole with the letter A and where it is shown that it comprises a spray booth **B,** a drying oven **C** and a cord belt **D** on which the hides **P** are spread out and conveyed in a continuous manner from the entrance of the spray booth B to the outlet of the drying oven **C.**

Such a system is described, for example, in patent document CN 107029916 A.

At the outlet of the spray booth **B** the cords are kept spaced apart by a grooved shaft **E** each groove of which guides at least one cord **D1.**

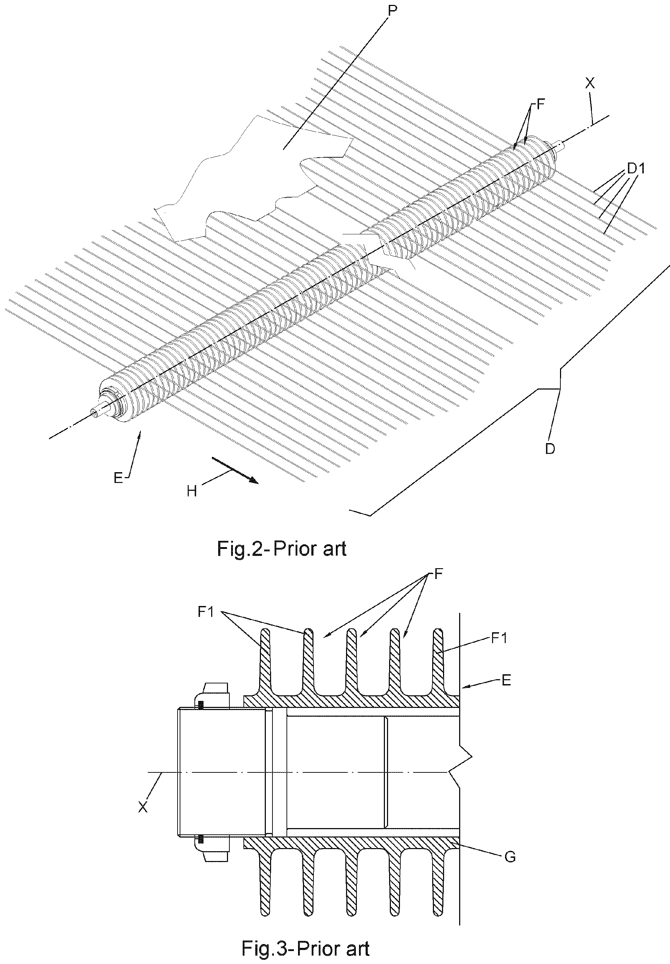

The grooved shaft **E** is shown in Fig. 2 where it shows that it comprises a plurality of grooves **F** placed side by side in which the cords **D1** comprising the cord belt **D** are placed.

Fig. 3 shows the section of the grooved shaft **E** made by means of a plane passing through its longitudinal axis **X,** and it can be noted therein that each groove **F** has a U-shaped profile and is defined by flat annular walls **F1** spaced apart and facing each other, protruding radially from the cylindrical body **G** of the grooved shaft **E.**

The cords **D1** advance in the direction indicated by the arrow **H** orthogonally with respect to the longitudinal axis **X,** as can be seen in Fig. 2, where each cord **D1,** in its respective groove **F,** is free to move crosswise with respect to the advance direction **H** and therefore parallel to the longitudinal axis **X,** as can be seen in Fig. 4 and in Fig. 6, its movement being constrained by the flat annular walls **F1** which prevent the cord from coming into contact with the adjacent cord.

The U-shaped profile of each groove **F,** while being useful for preventing mutual contact between the cords **D1,** nevertheless has the well-known drawback of favoring the soiling of the surface of the hides which rest on the cord belt **D** when the hides **P** pass over the grooved shaft **E.**

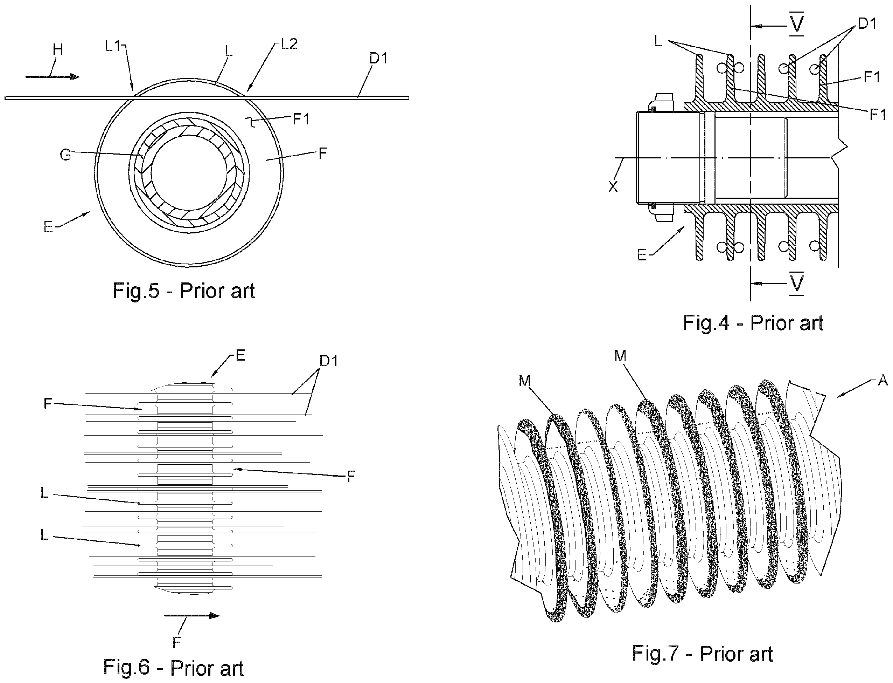

In fact, where the cords **D1** are not covered by the hides in the spray booth, they are sprayed with dye and as they move, due to the oscillation inside the grooves **F** that guide them, the cords themselves release the dye covering them on the outer perimeter edge **L** of the flat annular walls **F1** which delimit each respective groove **F** and with which they come into contact, as can be seen in Fig. 5, both at the entry point **L1** and at the exit point **L2.**

Thus a ring of dye **M** accumulates on each outer perimeter edge L as seen in Fig. 7 and ends up adhering to the back of each hide when, exiting the spray booth, it passes over the grooved shaft **E.**

It is clear that this results in a qualitative downgrading of the hide at the end of the treatment process which translates into economic loss for the company.

The present invention intends to overcome the aforementioned drawback and has the object of constructing a machine for the spray application of products, particularly dyes, on flexible laminar elements with a discontinuous extended surface in which the drawback of the aforementioned soiling of the hides does not occur at the exit of the spray booth when they pass over the grooved shaft that keeps the cords of the belt conveying the hides spaced apart.

The object is achieved by the machine of the invention according to the description provided in the main claim, to which reference is made.

Other features of the machine of the invention are described in the dependent claims.

Advantageously, the machine of the invention prevents the soiling of the hides where they rest on the cord belt when the hides pass over the grooved shaft thus preventing the economic losses due to the production of defective hides. The listed objects and advantages, as well as other possible ones, will be highlighted during the following description of a preferred but not exclusive embodiment of the invention with reference to the attached drawings in which:

- Fig. 1 shows a machine of the prior art for the spray application of products on discontinuous flexible laminar elements with an extended surface;
- Figs. 2 to 7 show details of the machine of Fig. 1;

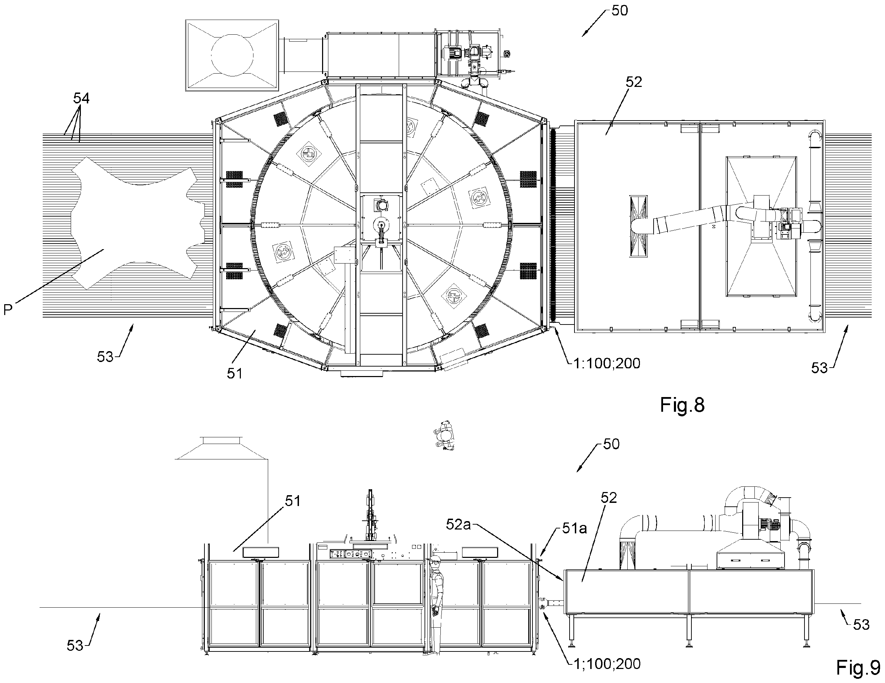

- Figs. 8 and 9 show two views of the machine of the invention for the spray application of products on discontinuous flexible laminar elements with an extended surface;

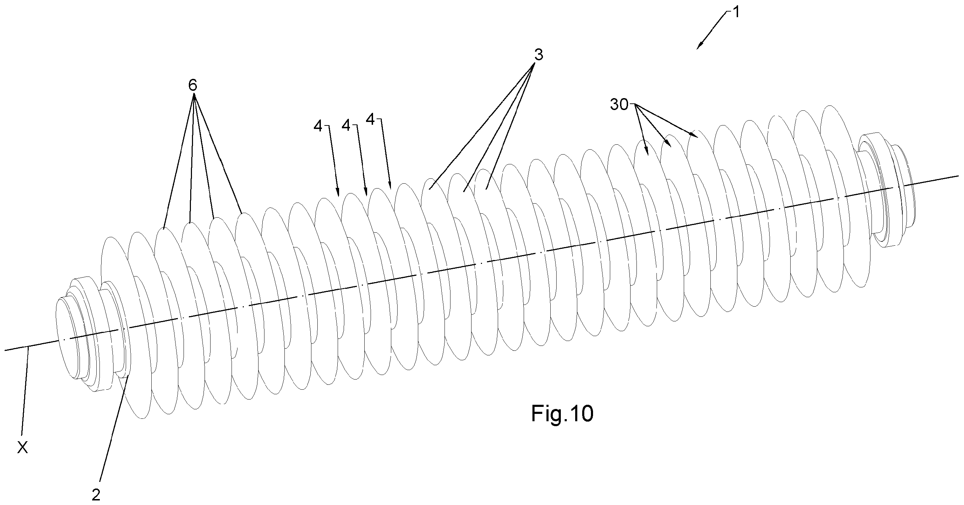

- Fig. 10 shows an axonometric view of the grooved shaft of the machine of Figs. 8 and 9;

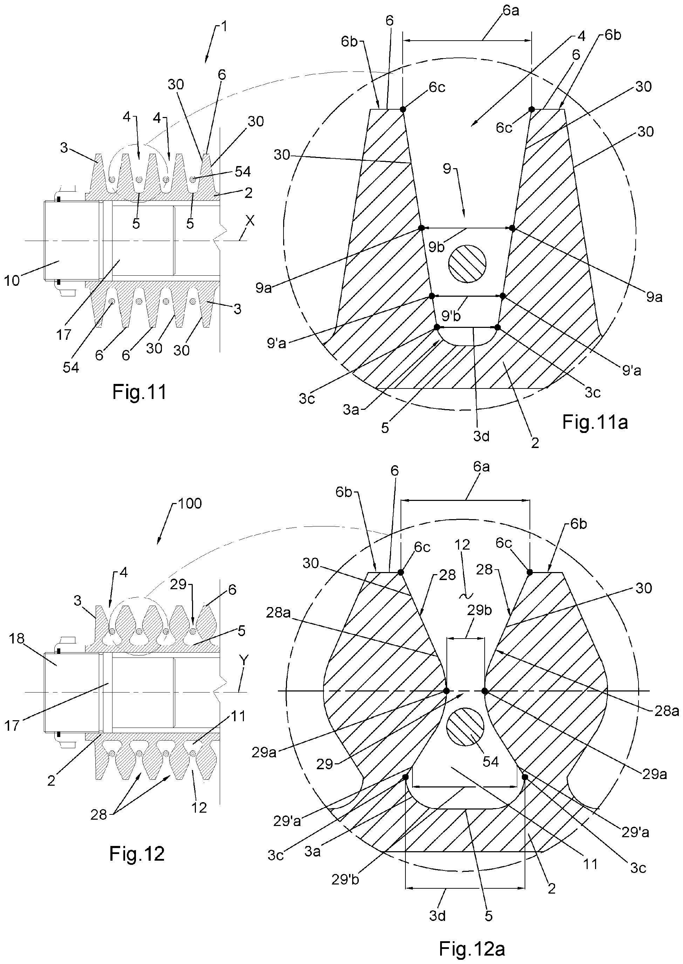

- Figs. 11 to 13 and their details - respectively Figs. 11a to 13a - show alternative embodiments of the grooved shaft of the invention shown in the axonometric drawing of Fig. 10.

The machine **50** for the spray painting treatment of discontinuous flexible laminar elements with an extended surface, in particular for tannery hides **P,** is shown in Figs. 8 and 9 where it can be noted that it comprises a spray booth **51** for the application of dye on the surface of the hides **P** with spraying means, a drying oven **52** to dry the hides **P** after being sprayed and a conveyor belt **53** to convey the hides **P** through the spray booth **51** and the drying oven **52**.

The conveyor belt **53** comprises a plurality of flexible cords **54** parallel to each other and spaced apart creating a resting surface on which the hides **P are** laid.

There are also motorization means of the known type and not shown to drive the conveyor belt **53** and the hides **P** resting on it through the spray booth **51** and the drying oven **52**.

There is also a grooved shaft **1; 100; 200,** visible in greater detail in Fig. 10, installed transversely to the conveyor belt **53** between the outlet **51a** of the spray booth **51** and the inlet **52a** of the drying oven **52** and having the function of keeping the flexible cords **54** parallel to each other and spaced apart during operation.

The grooved shaft **1; 100; 200** shown in Fig. 10 comprises a cylindrical body **2** which extends mainly along a longitudinal axis **X** and which externally has a plurality of radial annular discs **3** coaxial to each other along the longitudinal axis **X** thus determining a plurality of radial annular grooves **4**.

As can be noted, each groove is delimited by two of said radial annular discs **3** adjacent to each other, each of which has the radial annular wall **30** facing inwards with respect to the radial annular groove **4,** from the outer annular perimeter edges **6** of each of the radial annular discs **3** and finally by an annular bottom **5** belonging to the cylindrical body **2** which is connected to each radial annular wall **30** by means of an annular connecting zone **3a** belonging to the cylindrical body **2**.

According to the invention in the grooved shaft **1; 100; 200** each of the radial annular walls **30** extends between the starting point **3c** of the annular connecting zone **3a** and the starting point **6c** of the outer annular surface **6b** which perimetrically delimits the outer annular perimeter edge **6** and faces outward with respect to the radial annular groove **4**.

In at least one of said radial annular grooves **4** on the radial annular walls **30** there are at least two intermediate points **9a; 29a; 59a** where the distance **9b; 29b; 59b** between said at least two intermediate points **9a; 29a; 59a,** measured according to a straight line parallel to the direction defined by the longitudinal axis **X,** and the maximum distance **6a** between the radial annular walls **30,** measured in correspondence with said starting points **6c** of the outer annular surfaces **6b** that perimetrically delimit the outer annular perimeter edge **6,** which is also along a straight line parallel to the same direction defined by the longitudinal axis **X,** are related to each other by the following relation:

$$(9b; 29b; 59b) \leq (6a - 1\ \text{millimeter})$$

where the distances **9b, 29b, 59b, 6a** are expressed in millimeters.

The grooved shaft of the invention is shown in an axonometric view in Fig. 10 where it is indicated as a whole with number **1**.

It can be seen that it comprises a cylindrical body **2** which mainly extends along a longitudinal axis **X** where externally there are a plurality of annular radial discs **3** coaxial to each other, one after the other, along said longitudinal axis **X**.

In this way, along the longitudinal axis **X,** a plurality of radial annular grooves **4** are defined which open outwards with respect to the cylindrical body **2,** coaxial and adjacent to each other, each of which is delimited according to the direction defined by the longitudinal axis **X** by two annular radial discs **3** adjacent to each other.

One embodiment of the grooved shaft **1** is shown in Fig. 11 and in the detail view of Fig. 11a, in which each radial annular disc **3** has a radial annular wall **30** facing the inside of the radial annular groove **4** and, in a direction orthogonal to the longitudinal axis **X,** is delimited outwards by the outer annular perimeter edges **6** of each annular radial disc **3** and inwards by an annular bottom **5** belonging to the cylindrical body **2** which connects to each radial annular wall **30** through an annular connecting zone **3a,** also belonging to the cylindrical body **2**.

It is observed that the radial annular walls **30** extend between the annular connecting zones **3a** and the outer annular perimeter edges **6** and on the radial annular walls **30** there are at least two points **9a** which define an intermediate annular zone **9** between them.

The distance **9b** between said two points **9a** of the intermediate annular zone **9** measured according to the direction defined by the longitudinal axis **X** and the distance **6a** between the radial annular walls **30** measured in correspondence with the starting points **6c** of the outer annular surfaces **6b** which perimetrically delimit the outer annular perimeter edges **6** and face outward with respect to the radial annular groove **4,** also measured along the same straight line parallel to the same direction defined by the longitudinal axis **X,** are related to each other by the following relation:

$$9b \leq (6a - 1\ \text{millimeter}).$$

Therefore, as can be seen in Figs. 9 and 9a, the distance **6a** between the radial annular walls **30,** measured in correspondence with the starting points **6c** of said outer annular surfaces **6b** which perimetrically delimit the outer annular perimeter edges **6,** is greater than the distance **3d** between the radial annular walls **30** themselves measured in correspondence with the starting points **3c** of the annular connecting zones **3a,** where both distances **6a, 3d** are measured according to the same direction defined by the longitudinal axis **X**. The radial annular walls **30** are therefore converging towards the annular bottom **5**.

Furthermore, the distance **9'b** between any pair of points **9'a** identified on the radial annular walls **30** decreases linearly and continuously starting from the outer annular perimeter edges **6** to the annular bottom **5** and therefore the radial annular walls **30** each have a straight profile.

In this way the profile of each radial annular groove **4** recalls the shape of a trapezoid having the short base placed in correspondence with the annular bottom **5**.

The measurements of all distances **9b, 9'b** and **6a** are expressed in millimeters.

A variant embodiment of the grooved shaft of the invention, indicated as a whole with number **100**, is shown in Fig. 12 and in the detail Fig. 12a, where it can be observed that the radial annular walls **30** have protrusions **28** facing one another and towards the inside of each respective radial annular groove **4**. The outlines of the protrusions **28** have convexities **28a** facing towards the inside of the respective radial annular groove **4** and comprising a pair of intermediate points **29a**, between which there is the intermediate annular zone **29**.

The distance **29b** between said intermediate points **29a**, measured according to the direction defined by the longitudinal axis **X**, and the distance **6a** between the protrusions **28**, measured at the starting points **6c** of the outer annular surface **6b** which perimetrically delimits each of the outer annular perimeter edges **6** and faces outwards with respect to the radial annular groove **4**, and also measured according to the same direction defined by the longitudinal axis **X**, are related to each other by the following relation:

$$29b \leq (6a - 1 \text{ millimeter}).$$

In addition, the distance **29b** is also shorter than the distance **29'b** between any other pair of points **29'a** belonging to the same protrusions **28** where such distances are measured with reference to the direction defined by the longitudinal axis **X**.

Inside each radial annular groove **4** the intermediate annular zone **29** thus forms a narrowing of the radial annular groove **4** and divides it into two zones which include a lower annular zone **11** comprised between the intermediate annular zone **29** and the annular bottom **5** and an upper annular zone **12** comprised between the intermediate annular zone **29** and the outer annular perimeter edges **6**.

The measurements of all distances **29b, 29'b** and **6a** are expressed in millimeters.

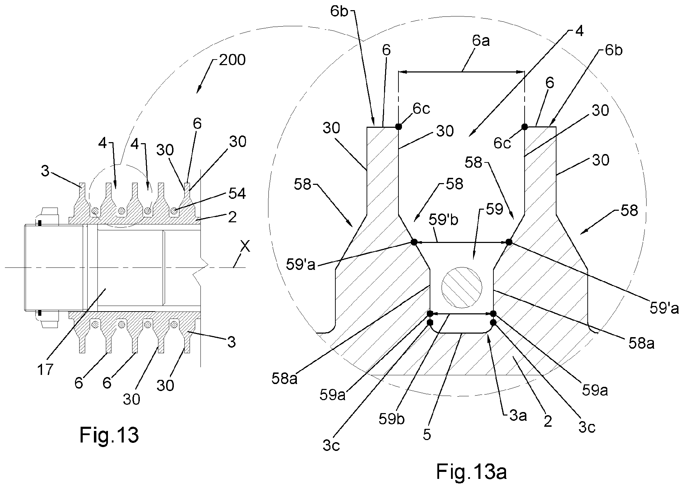

Another and not less important variant embodiment of the grooved shaft of the invention, indicated as a whole with number **200**, is shown in Fig. 13 and in the detail Fig. 13a where it is observed that the radial annular walls **30** have protrusions **58** facing one another and inwards with respect to each respective radial annular groove **4** which extend only for a portion of each respective radial annular wall **30** starting from the annular bottom **5** and have a shape which substantially recalls the profile of a right trapezoid.

The short bases **58a** of the right-angled trapezoid are opposite to each other, they face inwards with respect to the respective radial annular groove **4** and between them is the intermediate annular zone **59**.

The short bases **58a** have one or more pairs of intermediate points **59a** whose distance **59b**, measured according to the direction defined by the longitudinal axis **X**, and the distance **6a** between the annular radial walls **30**, measured at the starting points **6c** of the outer annular surface **6b** which perimetrically delimits each of the outer annular perimeter edges **6** and faces outwards with respect to the radial annular groove **4**, and also measured according to the same direction defined by the longitudinal axis **X**, are related to each other by the following relation:

$$59b \leq (6a - 1 \text{ millimeter}).$$

In addition, the distance **59b** is also shorter than the distance **59'b** between any other pair of points **59'a** belonging to the same protrusions **58** and in particular belonging to the oblique sides of the trapezoidal profile, where such other pairs of points **59'a** are to be understood as different from one or more pairs of intermediate points **59a**.

The measurements of all distances **59b, 59'b** and **6a** are expressed in millimeters.

Obviously the protrusions can be configured according to a multiplicity of shapes and profiles, different from those just described.

As far as the cylindrical body **2** is concerned, the Figures show that it comprises a single tubular body coupled externally to a support shaft **17** which is provided with end pins **18** for the support and possible motorization of the shaft itself.

There are possible variant embodiments, not shown herein, which provide for the cylindrical body to be made using a plurality of substantially disc-shaped tubular sleeves coupled coaxially and externally to the support shaft.

Said discs form annular grooves between them when they are arranged coaxially and in contact one after another.

Said discs can all be identical to each other so as to define annular grooves with the same profiles, or they can also be different from each other so as to create annular grooves with profiles that are different from each other.

In any case, other embodiments are not excluded.

The grooved shaft **1; 100; 200,** in the embodiments described and represented in Figs. 10 to 13a, is used in the machine of the invention for the spray painting of hides **P** as previously described and as shown in Figs. 8 and 9.

The grooved shaft keeps the flexible cords **54** parallel to each other and spaced apart during their forward movement in the direction indicated by the arrow **K** and the profiles of the radial annular grooves **4,** made according to the different embodiments that have been described, prevent the drawback of the soiling of the radial annular discs **3** and therefore of the hides **P** when these exit the spray booth **51,** as stated in the introduction.

In fact, during movement each flexible cord **54** remains confined inside the respective radial annular groove **4** where the geometries of the walls that delimit it, represented in Figs. 11 to 13 and in detail in Figs. 11a to 13a, prevent the flexible cord **54** from coming into contact with the outer annular perimeter edge **6** of the radial annular discs **3.**

In this way they do not get soiled and neither do the hides **P** when they come out of the drying oven **52.**

In particular, as regards the embodiment of the grooved shaft **1** of the alternative embodiment shown in Figs. 11 and 11a, the contact of the flexible cords **54** with the outer annular perimeter edge **6** of the radial annular discs **3** is prevented by the outward divergence of the radial annular walls **30** which delimit each radial annular groove **4.**

As far as the embodiment of the grooved shaft **100** is concerned, the contact of the flexible cords **54** with the outer annular perimeter edge **6** of the radial annular discs **3** is prevented since each flexible cord **54** remains confined in the lower annular zone **11** between the intermediate annular zone **29** and the annular bottom **5.**

Furthermore, in the upper annular zone **12** between the intermediate annular zone **29** and the outer annular perimeter edge **6,** the contact of the flexible cords **54** with the outer annular perimeter edge **6** of the radial annular discs **3** is prevented by the outward divergence of the radial annular walls **30.** Therefore, in all the embodiments described, during the forward movement, the flexible cord **54** remains confined in a substantially central position to the respective radial annular groove **4,** as can be seen in Figs. 11a to 13a, and therefore is not able to come into contact with the outer annular perimeter edge **6** of the radial annular discs **3.**

Although not shown in any figure, each radial annular groove **4** can be made with groove sizes suitable to host a plurality of flexible cords **54.**

On the basis of the above, it is therefore understood that the invention achieves the intended objects by providing a grooved shaft capable of preventing damage to the hides being processed after leaving the drying oven.

Advantageously, this enables a reduction in the number of hides that are downgraded for quality and a reduction in the consequent economic losses. During the construction phase, modifications and/or variants which have not been described and/or represented in the drawings may be made to the machine which is the object of the invention in order to improve its performance or make its construction more economical.

It is, however, understood that such modifications and/or variants, should they fall within the scope of the following claims, must be deemed protected by this patent.

**Claims**

1. Machine (50) for the spray application of products on discontinuous flexible laminar elements with an extended surface, in particular for the painting of tannery hides (P) comprising:

   - a spray booth (51) for applying dye to the surface of said hides (P) by means of spraying means;
   - a drying oven (52) for said hides (P) after the spraying treatment;
   - a conveyor belt (53) for said hides (P) comprising a plurality of flexible cords (54) parallel to each other and spaced apart which define a support surface on which said hides (P) are spread out;
   - motorization means to drive said conveyor belt (53) and said hides (P) resting thereon through said spray booth (51) and through said drying oven (52);
   - at least one grooved shaft (1; 100; 200) placed transversely to said conveyor belt (53) at least between the outlet (51a) of said spray booth (51) and the inlet (52a) of said drying oven (52) to keep said flexible cords (54) parallel to each other and spaced apart during their forward movement, said grooved shaft (1; 100; 200) comprising a cylindrical body (2) which extends mainly along a longitudinal axis (X) and externally to which there are a plurality of coaxial radial annular discs (3) one after another along said longitudinal axis (X) which define a plurality of radial annular grooves (4) between them each of which is delimited:

     - by two of said radial annular discs (3) adjacent to each other, each having the radial annular wall (30) facing inwards with respect to said radial annular groove (4);
     - by the outer annular perimeter edges (6) of each of said radial annular discs (3);
     - by an annular bottom (5) belonging to said cylindrical body (2) and connected to each of said radial annular walls (30) by means of an annular connecting zone (3a) belonging to said cylindrical body (2),

   **characterized in that** in said grooved shaft (1; 100; 200) each of said radial annular walls (30) extends between the starting point (3c) of said annular connecting zone (3a) and the starting point (6c) of the outer annular surface (6b) which perimetrically delimits said outer annular perimeter edge (6) and faces the outside of said radial annular groove (4), wherein in at least one of said radial annular grooves (4) on said radial annular walls (30) at least two intermediate points (9a; 29a; 59a) are defined in which the distance (9b; 29b; 59b) between said at least two intermediate points (9a; 29a; 59a), measured along a straight line parallel to the direction defined by said longitudinal axis (X), and the maximum distance (6a) between said radial annular walls (30), measured at said starting points (6c) of said outer annular surfaces (6b) which perimetrically delimit said outer annular perimeter edges (6), also measured according to a straight line parallel to the same direction defined by said longitudinal axis (X), are related to each other by the following relation:

$$(9b; 29b; 59b) \leq (6a - 1 \text{ millimeter})$$

in which said distances (9b, 29b, 59b, 6a) are expressed in millimeters.

2. Machine (50) according to claim 1, **characterized in that** in said grooved shaft (1) said distance (6a) between said radial annular walls (30), measured at said starting points (6c) of said outer annular surfaces (6b) which perimetrically delimit said outer annular perimeter edges (6), is greater than the distance (3d) between the same radial annular walls (30) measured at said starting points (3c) of said annular connecting zone (3a), where:

- both of said distances (6a, 3d) are measured according to a straight line parallel to the direction defined by said longitudinal axis (X);
- both of said radial annular walls (30) converge towards said annular bottom (5);
- the distance (9'b) between any pair of points (9'a) identified on the radial annular walls (30) decreases linearly and continuously starting from said outer annular perimeter edges (6) until said annular bottom (5) such that said radial annular walls (30) have a rectilinear profile which gives each radial annular groove (4) a profile that recalls the shape of a trapezoid having the short base placed in correspondence with said annular bottom (5).

3. Machine (50) according to claim 1, **characterized in that** in said grooved shaft (100) said radial annular walls (30) have protrusions (28) facing one another and inward with respect to each respective radial annular groove (4), the outlines of said protrusions (28) having convexities (28a) facing inward with respect to the respective radial annular groove (4) and comprising said pair of intermediate points (29a), the distance (29b) between which is related to the distance (6a) between said protrusions (28) measured at said starting points (6c) of the external annular surface (6b) which perimetrically delimits each of said outer annular perimeter edges (6) according to the following relation:

$$29b \leq (6a - 1 \text{ millimeter})$$

where said distances (29b) and (6a) are expressed in millimeters and said distance (29b) between said intermediate points (29a) is also less than the distance (29'b) between any other pair of points (29'a), other than said pair of intermediate points (29a), belonging to the same protrusions (28).

4. Machine (50) according to claim 1, **characterized in that** in said grooved shaft (200) said radial annular walls (30) have protrusions (58) facing one another and inwards with respect to each respective radial annular groove (4), wherein said protrusions (58) extend only for a portion of each of said radial annular walls (30) starting from said annular bottom (5) and their sections obtained with a section plane through said longitudinal axis (X) have a right trapezoid shape with the short bases (58a) facing each other and facing inward with respect to the respective radial annular groove (4), and wherein one or more pairs of said intermediate points (59a) pertain to said short bases (58a) the distance (59b) of which is related to the distance (6a) between the radial annular walls (30) measured at said starting points (6c) of the outer annular surface (6b) which perimetrically delimits each of said outer annular perimeter edges (6) according to the following relation:

$$59b \leq (6a - 1 \text{ millimeter})$$

where said distances (59b) and (6a) are expressed in millimeters and said distance (59b) between said intermediate points (59a) is also less than the distance (59'b) between any other pair of points (59'a) belonging to the same protrusions (58), said pair of points (59'a) being different from said one or more pairs of intermediate points (59a).

5. Machine (50) according to any of claims 1 to 4, **characterized in that** in said grooved shaft (1; 100; 200) said cylindrical body (2) comprises a single tubular body coupled externally to a support shaft (17) provided with end pins (18).

6. Machine (50) according to any of claims 1 to 4, **characterized in that** in said grooved shaft (1; 100; 200) said cylindrical body comprises a plurality of disk-shaped tubular sleeves which are coaxially coupled and placed side by side externally to a support shaft provided with end pins and between which said radial annular grooves (4) are defined.

**Patentansprüche**

1. Maschine (50) zum Aufsprühen von Produkten auf diskontinuierliche, flexible, laminare Elemente mit einer ausgedehnten Oberfläche, insbesondere zum Lackieren von Gerberhäuten (P), umfassend:

   - eine Sprühkabine (51) zum Lackieren der Oberfläche der besagten Häute (P) durch Sprühmittel;
   - einen Trockenofen (52) für die besagten Häute (P) nach der Sprühbehandlung;
   - ein Förderband (53) für die besagten Häute (P), das eine Vielzahl von flexiblen, zueinander parallelen und voneinander beabstandeten Schnüren (54) umfasst, die eine Auflagefläche bilden, auf der die besagten Häute (P) ausgebreitet werden;
   - Motorisierungsmittel für den Lauf des besagten Förderbandes (53) mit den darauf liegenden besagten Häuten (P) durch die besagte Sprühkabine (51) und durch den besagten Trockenofen (52);
   - mindestens eine Rillenwelle (1; 100; 200), die quer zu dem besagten Förderband (53) mindestens zwischen dem Ausgang (51a) der besagten Sprühkabine (51) und dem Eingang (52a) des besagten Trockenofens (52) angeordnet ist, um die besagten flexiblen Schnüre (54) während ihrer Vorwärtsbewegung parallel zueinander und auf Abstand zu halten, wobei die besagte Rillenwelle (1; 100; 200) einen zylindrischen Körper (2) umfasst, der sich hauptsächlich entlang einer Längsachse (X) erstreckt und an dem außen eine Vielzahl von koaxialen, radialen, ringförmigen Scheiben (3) vorhanden ist, die eine nach der anderen entlang der besagten Längsachse (X) angeordnet sind und zwischen sich eine Vielzahl von radialen, ringförmigen Rillen (4) definieren, von denen jede begrenzt ist:

     - durch zwei der besagten radialen ringförmigen Scheiben (3) nebeneinander, deren radiale Ringwand (30) in Bezug auf die besagte radiale, ringförmige Rille (4) jeweils nach innen weist;
     - durch die äußeren ringförmigen Umfangskanten (6) jeder der besagten radialen ringförmigen Scheiben (3);
     - durch einen ringförmigen Boden (5), der zu dem besagten zylindrischen Körper (2) gehört und mit jeder der besagten radialen Ringwände (30) über eine ringförmige Verbindungszone (3a) verbunden ist, die zu dem besagten zylindrischen Körper (2), gehört,

   **dadurch gekennzeichnet, dass** in der besagten Rillenwelle (1; 100; 200) jede der besagten radialen Ringwände (30) sich zwischen dem Anfangspunkt (3c) der besagten ringförmigen Verbindungszone (3a) und dem Anfangspunkt (6c) der äußeren ringförmigen Fläche (6b) erstreckt, welche die besagte äußere ringförmige Umfangskante (6) begrenzt und der Außenseite der besagten radialen ringförmigen Rille (4) zugewandt ist, wobei in mindestens einer der besagten radialen ringförmigen Rillen (4) auf den besagten radialen Ringwänden (30) mindestens zwei Zwischenpunkte (9a; 29a; 59a) definiert sind, wobei der Abstand (9b; 29b; 59b) zwischen den besagten mindestens zwei Zwischenpunkten (9a; 29a; 59a), gemessen entlang einer Geraden parallel zu der durch die besagte Längsachse (X) definierten Richtung, und der maximale Abstand (6a) zwischen den besagten radialen ringförmigen Wänden (30), gemessen an den Anfangspunkten (6c) der besagten äußeren ringförmigen Flächen (6b), welche die besagten äußeren ringförmigen Umfangskanten (6) perimetrisch begrenzen, ebenfalls gemessen entlang einer Geraden parallel zu derselben durch die besagte Längsachse (X) definierten Richtung, durch die folgende Beziehung zueinander in Beziehung gesetzt werden:

$$(9b; 29b; 59b) \leq (6a - 1 \text{ Millimeter}),$$

   in der die besagten Abstände (9b, 29b, 59b, 6a) in Millimetern angegeben sind.

2. Maschine (50) nach Anspruch 1, **dadurch gekennzeichnet, dass** in der besagten Rillenwelle (1) der besagte Abstand (6a) zwischen den besagten radialen ringförmigen Wänden (30), gemessen an den besagten Anfangspunkten (6c) der besagten äußeren ringförmigen Flächen (6b), welche die äußeren ringförmigen Umfangskanten (6) perimetrisch begrenzen, größer ist als der Abstand (3d) zwischen denselben radialen ringförmigen Wänden (30), gemessen an den besagten Anfangspunkten (3c) der besagten ringförmigen Verbindungszone (3a), wobei:

   - beide besagte Abstände (6a, 3d) auf einer Geraden gemessen werden, die parallel zu der durch die besagte Längsachse (X) definierten Richtung verläuft;
   - beide besagten radialen ringförmigen Wände (30) zum besagten ringförmigen Boden (5) hin konvergieren;

- der Abstand (9'b) zwischen einem beliebigen Paar von Punkten (9'a), die auf den radialen ringförmigen Wänden (30) identifiziert sind, linear und kontinuierlich abnimmt, ausgehend von den besagten äußeren ringförmigen Umfangskanten (6) bis zum besagten ringförmigen Boden (5), sodass die besagten radialen ringförmigen Wände (30) ein geradliniges Profil aufweisen, das jeder radialen ringförmigen Rille (4) ein Profil verleiht, das an die Form eines Trapezes erinnert, dessen kurze Basis in Übereinstimmung mit dem besagten ringförmigen Boden (5) angeordnet ist.

3. Maschine (50) nach Anspruch 1, **dadurch gekennzeichnet, dass** in der besagten Rillenwelle (100) die besagten radialen ringförmigen Wände (30) Vorsprünge (28) aufweisen, die in Bezug auf jede jeweilige radiale ringförmige Rille (4) einander zugewandt und nach innen gerichtet sind, wobei die Umrisse der besagten Vorsprünge (28) Konvexitäten (28a) aufweisen, die in Bezug auf die jeweilige radiale ringförmige Rille (4) nach innen gerichtet sind und das besagte Paar von Zwischenpunkten (29a) umfassen, wobei der Abstand (29b) zwischen ihnen mit dem Abstand (6a) zwischen den besagten Vorsprüngen (28) in Beziehung steht, der an den besagten Anfangspunkten (6c) der äußeren ringförmigen Fläche (6b) gemessen wird, die jede der besagten äußeren ringförmigen Umfangskanten (6) perimetrisch begrenzt, gemäß der folgenden Beziehung:

$$29b \leq (6a - 1 \text{ Millimeter})$$

wobei die besagten Abstände (29b) und (6a) in Millimetern ausgedrückt sind und der besagte Abstand (29b) zwischen den besagten Zwischenpunkten (29a) auch geringer ist als der Abstand (29'b) zwischen jedem anderen Paar von Punkten (29'a), das sich vom besagten Paar von Zwischenpunkten (29a) unterscheidet und zu denselben Vorsprüngen (28) gehört.

4. Maschine (50) nach Anspruch 1, **dadurch gekennzeichnet, dass** in der besagten Rillenwelle (200) die besagten radialen ringförmigen Wände (30) Vorsprünge (58) aufweisen, die in Bezug auf jede jeweilige radiale ringförmige Rille (4) einander zugewandt und nach innen gerichtet sind, wobei sich die besagten Vorsprünge (58) nur über einen Teil jeder der besagten radialen ringförmigen Wände (30) erstrecken, beginnend mit dem besagten ringförmigen Boden (5), und ihre Schnitte, die mit einer Schnittebene durch die besagte Längsachse (X) erhalten werden, eine rechtwinklige Trapezform haben, wobei die kurzen Basen (58a) in Bezug auf die jeweilige radiale ringförmige Rille (4) einander zugewandt sind und nach innen weisen, und wobei ein oder mehrere Paare der besagten Zwischenpunkte (59a) zu den besagten kurzen Basen (58a) gehören, deren Abstand (59b) mit dem Abstand (6a) zwischen den radialen ringförmigen Wänden (30) in Beziehung steht, der an den besagten Anfangspunkten (6c) der äußeren ringförmigen Fläche (6b) gemessen wird, die jede der besagten äußeren ringförmigen Umfangskanten (6) perimetrisch begrenzt, gemäß der folgenden Beziehung:

$$59b \leq (6a - 1 \text{ Millimeter})$$

wobei die besagten Abstände (59b) und (6a) in Millimetern ausgedrückt sind und der besagte Abstand (59b) zwischen den besagten Zwischenpunkten (59a) ebenfalls geringer ist als der Abstand (59'b) zwischen jedem anderen Paar von Punkten (59'a), die zu denselben Vorsprüngen (58) gehören, wobei sich das besagte Paar von Punkten (59'a) von dem besagten einen oder den besagten mehreren Paaren von Zwischenpunkten (59a) unterscheidet.

5. Maschine (50) nach jeglichem der Ansprüche 1 bis 4, **dadurch gekennzeichnet, dass** in der besagten Rillenwelle (1; 100; 200) der besagte zylindrische Körper (2) einen einzigen rohrförmigen Körper umfasst, der außen mit einer Stützwelle (17) gekoppelt ist, die mit Endstiften (18) versehen ist.

6. Maschine (50) nach jeglichem der Ansprüche 1 bis 4, **dadurch gekennzeichnet, dass** in der besagten Rillenwelle (1; 100; 200) der besagte zylindrische Körper eine Vielzahl von scheibenförmigen rohrförmigen Hülsen umfasst, die koaxial gekoppelt und nebeneinander außen an einer mit Endstiften versehenen Stützwelle angeordnet sind und zwischen denen die besagten radialen ringförmigen Rillen (4) definiert sind.

**Revendications**

1. Machine (50) pour l'application par pulvérisation de produits sur des éléments laminaires flexibles discontinus avec une surface étendue, en particulier pour la teinture de cuirs de tannerie (P) comprenant:

   - une cabine de pulvérisation (51) pour l'application de colorant sur la surface desdits cuirs (P) par l'intermédiaire de moyens de pulvérisation;
   - un four de séchage (52) pour lesdits cuirs (P) après le traitement de pulvérisation;
   - une bande transporteuse (53) pour lesdits cuirs (P) comprenant une pluralité de cordons flexibles (54) parallèles et espacés entre eux qui dé-

8

finissent une surface de support sur laquelle lesdits cuirs (P) sont étalés;

- des moyens de motorisation pour actionner ladite bande transporteuse (53) et lesdits cuirs (P) reposant sur celle-ci le long de ladite cabine de pulvérisation (51) et le long dudit four de séchage (52);

- au moins un arbre cannelé (1; 100; 200) positionné transversalement à ladite bande transporteuse (53) au moins entre la sortie (51a) de ladite cabine de pulvérisation (51) et l'entrée (52a) dudit four de séchage (52) pour maintenir lesdits cordons flexibles (54) parallèles et espacés entre eux durant leur mouvement avant, ledit arbre cannelé (1; 100; 200) comprenant un corps cylindrique (2) qui s'étend principalement le long d'un axe longitudinal (X) et extérieurement auquel se trouve une pluralité de disques annulaires radiaux coaxiaux (3) un après l'autre le long dudit axe longitudinal (X) qui définit entre eux une pluralité de rainures annulaires radiales (4) chacune desquelles est délimité:

   - par deux desdits disques annulaires radiaux (3) adjacents entre eux, chacun ayant une paroi annulaire radiale (30) tournée vers l'intérieur par rapport à ladite rainure annulaire radiale (4);
   - par les bords de périmètre annulaires extérieurs (6) de chacun desdits disques annulaires radiaux (3);
   - par un fond annulaire (5) appartenant audit corps cylindrique (2) et relié à chacune desdites parois annulaires radiales (30) au moyen d'une zone de connexion annulaire (3a) appartenant audit corps cylindrique (2),

**caractérisée en ce que** dans ledit arbre cannelé (1; 100; 200) chacune desdites parois annulaires radiales (30) s'étend entre le point de départ (3c) de ladite zone de connexion annulaire (3a) et le point de départ (6c) de la surface annulaire extérieure (6b) qui délimite sur le périmètre ledit bord de périmètre annulaire extérieur (6) et tournée vers l'extérieur de ladite rainure annulaire radiale (4), où dans au moins une desdites rainures annulaires radiales (4) sur lesdites parois annulaires radiales (30) au moins deux points intermédiaires (9a; 29a; 59a) sont définis dans lesquels la distance (9b; 29b; 59b) entre lesdits au moins deux points intermédiaires (9a; 29a; 59a), mesurée le long d'une ligne droite parallèle à la direction définie par ledit axe longitudinal (X), et la distance maximale (6a) entre lesdites parois annulaires radiales (30), mesurée auxdits points de départ (6c) desdites surfaces annulaires extérieures (6b) qui délimitent sur le périmètre lesdits bords de périmètre annulaires extérieurs (6), mesurée elle-aussi selon une ligne droite parallèle à la même direction définie par ledit axe longitudinal (X), sont associées entre elles par la relation suivante:

$$(9b;\ 29b;\ 59b) \leq (6a - 1\ \text{millimètre})$$

dans laquelle lesdites distances (9b, 29b, 59b, 6a) sont exprimées en millimètres.

2. Machine (50) selon la revendication 1, **caractérisée en ce que** dans ledit arbre cannelé (1) ladite distance (6a) entre lesdites parois annulaires radiales (30), mesurée auxdits points de départ (6c) desdites surfaces annulaires extérieures (6b) qui délimitent sur le périmètre lesdits bords de périmètre annulaires extérieurs (6), est plus grande que la distance (3d) entre les mêmes parois annulaires radiales (30) mesurée auxdits points de départ (3c) de ladite zone de connexion annulaire (3a), où:

   - lesdites deux distances (6a, 3d) sont mesurées selon une ligne droite parallèle à la direction définie par ledit axe longitudinal (X);
   - lesdites deux parois annulaires radiales (30) convergent vers ledit fond annulaire (5);
   - la distance (9'b) entre une paire quelconque de points (9'a) identifiés sur les parois annulaires radiales (30) diminue linéairement et continuellement à partir desdits bords de périmètre annulaires extérieurs (6) jusqu'audit fond annulaire (5) de manière à ce que lesdites parois annulaires radiales (30) présentent un profil rectiligne qui donne à chaque rainure annulaire radiale (4) un profil qui rappelle la forme d'un trapèze ayant la petite base disposée à hauteur dudit fond annulaire (5).

3. Machine (50) selon la revendication 1, **caractérisée en ce que** dans ledit arbre cannelé (100) lesdites parois annulaires radiales (30) présentent des saillies (28) disposées l'une en face de l'autre et à l'intérieur par rapport à chaque rainure annulaire radiale correspondante (4), les contours desdites saillies (28) ayant des convexités (28a) tournées vers l'intérieur par rapport à la rainure annulaire radiale correspondante (4) et comprenant ladite paire de points intermédiaires (29a), dont la distance (29b) est associée à la distance (6a) entre lesdites saillies (28) mesurée auxdits points de départ (6c) de la surface annulaire extérieure (6b) qui délimite sur le périmètre chacun desdits bords de périmètre annulaires extérieurs (6) selon la relation suivante:

$$29b \leq (6a - 1\ \text{millimètre})$$

où lesdites distances (29b) et (6a) sont exprimées en millimètres et ladite distance (29b) entre lesdits points intermédiaires (29a) est inférieure aussi à la distance (29'b) entre n'importe quelle autre paire de points (29'a) différente de ladite paire de points intermédiaires (29a), appartenant aux mêmes saillies (28).

4.  Machine (50) selon la revendication 1, **caractérisée en ce que** dans ledit arbre cannelé (200) lesdites parois annulaires radiales (30) présentent des saillies (58) disposées l'une en face de l'autre et vers l'intérieur par rapport à chaque rainure annulaire radiale correspondante (4), où lesdites saillies (58) s'étendent uniquement pour une portion de chacune desdites parois annulaires radiales (30) à partir dudit fond annulaire (5) et leurs sections obtenues avec un plan de section passant par ledit axe longitudinal (X) présentent une forme de trapèze rectangle avec les petites bases (58a) tournées l'une vers l'autre et vers l'intérieur par rapport à la rainure annulaire radiale correspondante (4), et où une ou plusieurs paires desdits points intermédiaires (59a) appartiennent auxdites petites bases (58a) dont la distance (59b) est associée à la distance (6a) entre les parois annulaires radiales (30) mesurées auxdits points de départ (6c) de la surface annulaire extérieure (6b) qui délimite sur le périmètre chacun desdits bords de périmètre annulaires extérieurs (6) selon la relation suivante:

$$59b \leq (6a - 1 \text{ millimètre})$$

où lesdites distances (59b) et (6a) sont exprimées en millimètres et ladite distance (59b) entre lesdits points intermédiaires (59a) est inférieure aussi à la distance (59'b) entre n'importe quelle autre paire de points (59'a) appartenant aux mêmes saillies (58), ladite paire de points (59'a) étant différente desdites une ou plusieurs paires de points intermédiaires (59a).

5.  Machine (50) selon l'une quelconque des revendications de 1 à 4, **caractérisée en ce que** dans ledit arbre cannelé (1; 100; 200) ledit corps cylindrique (2) comprend un corps tubulaire unique relié extérieurement à un arbre de support (17) doté de goupilles d'extrémité (18).

6.  Machine (50) selon l'une quelconque des revendications de 1 à 4, **caractérisée en ce que** dans ledit arbre cannelé (1; 100; 200) ledit corps cylindrique comprend une pluralité de manchons tubulaires à forme de disque qui sont reliés de manière coaxiale et sont positionnés l'un à côté de l'autre extérieurement à un arbre de support doté de goupilles d'extrémité et entre lesquelles lesdites rainures annulaires radiales (4) sont définies.

Fig.1-Prior art

Fig.2- Prior art

Fig.3- Prior art

Fig.4 - Prior art

Fig.7 - Prior art

Fig.5 - Prior art

Fig.6 - Prior art

Fig.8

Fig.9

Fig.10

Fig.11

Fig.11a

Fig.12

Fig.12a

Fig.13

Fig.13a

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107029916 A